(19) Europäisches Patentamt
European Patent Office
Office européen des brevets

(11) Publication number: **0 078 020**
**B1**

(12) # EUROPEAN PATENT SPECIFICATION

(45) Date of publication of patent specification: **01.06.88**

(51) Int. Cl.$^4$: **C 08 L 67/02**

(21) Application number: **82109708.6**

(22) Date of filing: **20.10.82**

(54) **Heat resisting polyester composition.**

(30) Priority: **26.10.81 JP 171051/81**

(43) Date of publication of application:
**04.05.83 Bulletin 83/18**

(45) Publication of the grant of the patent:
**01.06.88 Bulletin 88/22**

(84) Designated Contracting States:
**BE DE FR GB IT NL**

(56) References cited:
**EP-A-0 054 392**
**GB-A-1 220 322**
**GB-A-1 568 760**
**GB-A-2 011 437**
**GB-A-2 040 953**
**US-A-3 668 172**
**US-A-4 105 622**

(73) Proprietor: **POLYPLASTICS CO. LTD.**
**30 Azuchimachi 2-chome**
**Higashi-ku Osaka-shi (JP)**

(72) Inventor: **Kasuga, Takuzo**
**324 Miyashita**
**Fuji-shi Shizuoka (JP)**
Inventor: **Takahashi, Katsuhiko**
**324 Miyashita**
**Fuji-shi Shizuoka (JP)**
Inventor: **Nakashima, Tuneyasu**
**760, Kizuki, Nakahara-ku**
**Kawasaki-shi Kanagawa (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

**EP 0 078 020 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a fire retardant thermoplastic polyester composition having improved moldability, mechanical properties, heat-resistive property in melting or long-term heat aging and color durability; in particular it relates to a thermoplastic polyester composition consisting of fire retardant polyalkylene terephthalate resins blended with polyethylene wax.

High molecular weight polyesters or copolymerized polyesters consisting of glycol and terephthalic acid or isophthalic acid are widely used as engineering plastics because they have superior mechanical properties, electric properties, and moldability. However, the uses of these thermoplastic polyesters are limited owing to their inflammability. Accordingly, various methods have been tried in order to obtain fire retardant thermoplastic polyesters.

Conventionally, halogen-containing organic compounds such as decabromodiphenylether, brominated polycarbonate, brominated esters of cyanuric acid and brominated epoxy compounds have been blended with thermoplastic polyesters in order to obtain fire retardant thermoplastic polyesters.

Also it is known that the use of assistant fire retardants such as oxides and hydroxides of metals, including antimony trioxide, antimony halogenides, aluminum hydroxide and magnesium hydroxide, together with said fire retardants leads to still more superior fire retardant effects.

In GB—A—2 040 953 there are disclosed compositions comprising polybutylene terephthalate, decabromodiphenyl ether, antimony oxide, polyethylene and glass fibers. From GB—A—2 011 437 it has already been known to add a small amount of a polyolefin into the composition in order to avoid problems which result from the presence of flame-retardants which is detrimental to the physical properties of polyesters.

However, these compounds are also disagreeable in respect of heat-resisting property of resins. That is to say, the above described halogen-containing organic compounds are gradually decomposed by the action of heat or light to generate halogen radicals and then hydrogen-extracting reaction is carried out to generate hydrogen halogenides. The resulting radicals or hydrogen halogenides lead to the deterioration of resins because they accelerate the radical decomposition, hydrolysis, ester exchanges and the like of polyester resins. On the other hand, also inorganic compounds represented by antimony trioxide give bad influences upon heat-resistive property of polyester resins because they act as catalyzers of hydrolysis and ester-exchanging reactions essentially.

Accordingly, mechanical properties of resins containing these fire retardants added thereto are remarkably lowered when they reside in an extruder or a molder for a long time or are subjected to heat aging for a long time. Accordingly, if the bad influences of said fire retardants on resins can be controlled without spoiling the fire retardant effects thereof, not only the compositions of said resins will be more more widely used but also the molded products of hot-liner type, which have never been used owing to an insufficient heat-resistive property thereof and are advantageous in respect of resource-saving, can be attained.

The inventors found that heat resistance owing to the deterioration of resins, moldability, mechanical properties and the like of fire retardant polyesters can be remarkably improved by blending them with a low molecular weight polyethylene wax prepared in a specific manner and containing some polar groups. Also it was found by the inventors that the use of said fire retardants and assistant fire retardants, which were previously blended with polyolefins or copolymers of olefin at temperatures higher than melting points thereof followed by cooling and then grinding, still further improved the above described effects.

That is to say, the present invention relates to a fire retardant thermoplastic polyester composition consisting of thermoplastic polyester resins containing fire retardants, assistant fire retardants and inorganic fillers added thereto and a low molecular polyethylene wax prepared by the thermal decomposition of polyethylene and containing some polar groups blended therewith, in particular to compositions containing fire retardants and assistant fire retardants which were previously blended with said polyethylene wax at temperatures higher than melting points thereof followed by cooling and then grinding.

According to the present invention, heat resistance, color durabilty and mechanical properties of thermoplastic polyester resins can be remarkably improved, in particular when melting or heat aging for a long time.

This effect of the present invention cannot be attained by using stabilizers which have been generally used for polyester compositions. It is, perhaps, the reason for this fact that radical decomposition, hydrolysis, ester exchange and the like can be controlled thereby resins can be prevented from deteriorating by blending thermoplastic polyester resins with polyethylene wax as defined above.

The polyethylene wax as defined above is used owing to easy wetting and melting/blending of fire retardants and assistant fire retardants while extrusion. Polyethylene wax manufactured by thermal decomposition of polyethylene resin is suitable for the object of the present invention in respect of its dispersability because it contains some polar groups.

The amount of said polyethylene wax used may be appropriately selected within a range of 0,5 to 100% by weight based on said fire retardants and assistant fire retardants, preferably a range of 2 to 50% by weight. Accordingly, a remarkably small amount of said polyethylene wax based on the whole polyester composition is sufficient. Even 5% or less by weight, further 1% or less by weight of said polyethylene wax

based on the whole polyester composition can give the above described effect.

The compositions of the present invention can contain further antioxidants which are various kinds of derivatives of hindered phenols and hindered amines; phosphorus-containing stabilizers which are aromatic phosphites such as triphenylphosphite and tricresylphosphite, alkylphosphite such as tridodecylphosphite or phosphonate; as well as generally available antioxidants, ultraviolet ray absorbents, hydrolysis inhibitors and heat stabilizers.

Polyester compositions of the present invention can contain further reinforcing agents such as glass fibers, carbon fibers; pigments; dyes; fillers such as talc, potassium titanate; lubricants; antistatic agents; crystalline nuclei; plasticizers and foaming agents.

Generally available halogen-containing organic compounds, phosphorus containing organic compounds, preferably bromine-containing organic compounds are used for fire retardants in the present invention. Said bromine contained organic compounds include bromine-containing diphenylether, ethylene-bis-phenylether of which 5 to 10 hydrogens in aromatic rings are replaced by bromine atoms, aromatic carbonates derived from bis-phenol A, bromides of monomers or their polymers of epoxy compounds of said aromatic carbonates, bromides of polystyrene oligomers, brominated cyanuric esters.

It is desired to use said fire retardants at a ratio as small as possible because a large amount of them leads to the deterioration of mechanical properties of compositions. The amount thereof is generally 2 to 50% by weight, preferably 3 to 20% by weight based on the whole composition.

The kinds of said assistant fire retardants are not limited but they include antimony trioxide, aluminium hydroxide and magnesium hydroxide.

Mixtures consisting of two kinds or more of said fire retardants also can be used. Said mixtures include the mixture of decabromodiphenylether and brominated polycarbonate and the mixture of decabromodiphenylether and brominated epoxy compounds.

It is found that brominated cyanuric acid ester compounds, which have been used generally as fire retardants, exhibit an additional heat resistive effect in melting when used together with other fire retardants and they exhibit an effect also as stabilizers. In this case the amount thereof used is not limited.

Brominated cyanuric acid ester compounds containing triazine rings represented by the following general formula therein or their mixtures may be suitably used as said brominated cyanuric acid ester compounds in the present invention:

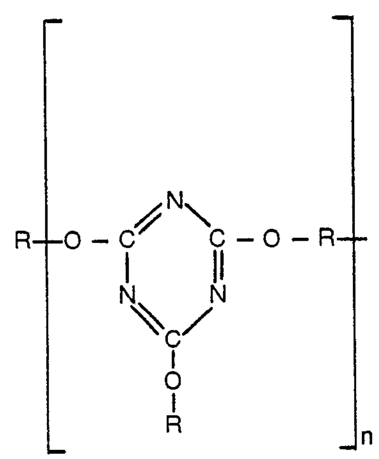

wherein

n: Degree of polymerization,

R: H, $R_1$, $R_2$,

$R_1$:

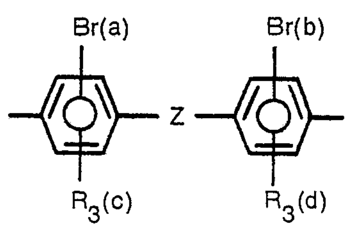

$a + b + c + d \leqq 8$

Z: Alkylidene, alkylene, $—SO_2—$, —SO—, —S—, —O—, Z=O

$R_3$: H, lower alkyl group, halogenized lower alkyl group, and

$R_2$:

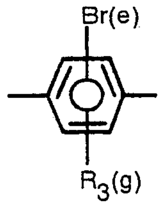

$e + g \leqq 5$

At least one of R is $R_1$ and the end portion of $R_1$ is H, OH or $R_2$.

Said polyester resins used in the present invention can be obtained from glycols and terephthalic acid or its derivatives as acidic components. However, these components may be denatured by other glycols or dicarboxylic acids. Said dicarboxylic acids used for denaturing said polyester resins include alkyl derivatives of phthalic acids such as those of isophthalic acid, naphthalene dicarboxylic acid; aromatic dicarboxylic acids; aliphatic or cycloaliphatic dicarboxylic acids such as succinic acid, adipic acid, azelaic acid, dodecanoic acid, cyclohexane dicarboxylic acid.

Said glycols used for denaturing include aliphatic or cycloaliphatic glycols such as neopentyl glycol, 1,4-dimethylolcyclohexane, 2-methylpentanol, bisphenol A.

Also the mixtures consisting of two kinds or more of these denaturing components may be used.

Said polyester resins preferably used in the present invention include polyalkylene terephthalate resins such as polyethylene terephthalate, polybutylene terephthalate.

Also the mixtures consisting of two kinds or more of said polyester resins may be used. In particular, the mixture of polyethylene terephthalate and polybutylene terephthalate is desirable.

Said polyesters used in the present invention have inherent viscosity of at least 0.4 to 1.5 dl/g, preferably 0.7 to 1.2 dl/g measured in o-chlorophenol at 23°C and at a concentration of 8%.

Although said polyester resins are generally blended with said polyethylene wax by preliminarily dryblending said polyethylene wax with said polyester resins, fire retardants, assistant fire retardants and other additives, then melting/mixing by means of an extruder heated followed by extruding to pelletize, other various mixing methods also may be used.

The preliminary blend of said polyethylene wax with said fire retardants and assistant fire retardants is particularly desirable. In this case, the blend is carried in Henschel mixer provided with a jacket, Banbury mixer, extruder and the like at temperatures higher than its melting point. The resulting blend is cooled and then ground. The resulting blend is further blended with said polyester resins together with other additives and then the resulting composition is pelletized by means of the above described general method. Also said fire retardants and assistant fire retardants as well as other additives may be preliminarily blended with said polyethylene wax.

The present invention will be in detail described by reference to examples hereafter.

Examples 1 to 5 and Comparative Examples 1 to 4

The component having the compositions as shown in Table I was obtained by mixing polybutylene terephthalate (PBT) having inherent viscosity of 0.80 dl/g with polyethylene terephthalate (PET) having inherent viscosity of 0.68 dl/g.

In these examples, said fire retardants and assistant fire retardants were preliminarily blended with low molecular weight polyethylene in the following manner:

The appointed amount of said low molecular weight polyethylene was blended with said halogen contained organic compounds, which are fire retardants, and antimony trioxide, which is an assistant fire retardant, at temperatures higher than melting points of said low molecular weight polyethylene in Henschel mixer provided with a jacket heated by water vapor. After the blend was sufficiently carried out, the resulting blend was cooled by water and then ground.

The compositions consisting of components at ratios as shown in Table I were extruded to pelletize by means of a 65 mm extruder of single type heated up to 240 to 250°C.

The resulting pellets were dried in a hot blast dryer and then injection molded by means of an injection molding machine, of which cylinder temperature was adjusted to 260°C, to obtain test pieces for ASTM tensile tests.

The test pieces obtained by molding according to the general molding cycle (injection of 20 seconds + cooling of 10 seconds) were compared with the test pieces obtained by molding after the compositions were resided inside an extruder for 30 minutes on heat resistance. In addition, the test pieces were tested on tensile strength after heat aging for a long time in a hot blast dryer kept at 200°C.

Color durability in melting was compared on the basis of the degree of discoloration $\Delta E$. That is to say, Hunter's color indicating system L, a, b of the test pieces was measured by means of a digital color measuring machine and said degree of discoloration $\Delta E$ was calculated by the following equation: The smaller the value of $\Delta E$ is, the more superior color durability is.

$$\Delta E = \sqrt{(L - L_0)^2 + (a - a_0)^2 + (b - b_0)^2},$$

wherein

$L_0$, $a_0$, $b_0$: the values of the test pieces molded without residing in an extruder, and

L, a, b: the values of the test pieces molded after the compositions were resided inside an extruder for 30 minutes.

The results are shown in Table I and Table II.

The values of composition shown in Table I are all expressed by percentages by weight based on the whole composition excluding the amount of polyethylene to be previously treated.

TABLE I

| Composition and physical properties | | Examples | | | | | Comparative Examples | | | |
|---|---|---|---|---|---|---|---|---|---|---|
| | | 1 | 2 | 3 | 4 | 5 | 1 | 2 | 3 | 4 |
| PBT | | 58.5 | 58.5 | 42.5 | 58.2 | 69.1 | 58.5 | 42.5 | 69.1 | 58.2 |
| PET | | | | 14.1 | | | | 14.1 | | |
| Glass fibers | | 31.0 | 31.0 | 31.0 | 31.0 | 18.0 | 31.0 | 31.0 | | |
| Asbestos | | 2.5 | 2.5 | 2.5 | 2.5 | 3.0 | 2.5 | 2.5 | 3.0 | 2.5 |
| Halogen-containing compounds | | 3.8*2 | 3.8*2 | 5.8*3 | 3.3*2 0.8*3 | 4.7*2 | 3.8*2 | 5.8*3 | 4.7*2 | 3.3*2 0.8*3 |
| *1 Amount of PE to be previously treated (% by weight based on halogen contained compounds) | | 13 | 40 | 40 | 10 | 10 | | | | |
| Antimony trioxide | | 4.2 | 4.2 | 4.1 | 4.2 | 5.2 | 4.2 | 4.1 | 5.2 | 4.2 |
| Changes of physical properties in dependence upon residence time of compositions in an extruder prior to molding | | | | | | | | | | |
| Tensile strength ($kg/cm^2$) | 0 minute | 1458 | 1385 | 1180 | 1435 | 1230 | 1285 | 1035 | 1230 | 1398 |
| | 30 minutes | 1296 | 1193 | 1013 | 1378 | 1058 | 835 | 777 | 743 | 979 |
| Degree of discoloration | 30 minutes | 3.72 | 3.77 | 4.02 | 3.50 | 4.96 | 9.51 | 9.62 | 9.03 | 8.96 |
| Heat aging at 200°C | | 1385 | 1274 | 944 | 1363 | 1143 | 1028 | 757 | 981 | 1160 |

*1 Low molecular weight polyethylene (molecular weight of 5,000; manufactured by thermal decomposition method)
*2 Decabromodiphenylether
*3 Brominated cyanuric acid ester compounds

TABLE II

| Physical properties \ Cases | Example 2 | Comparative example 1 |
|---|---|---|
| Izod impact strength (kp . cm/cm) With notch | 7.8 | 8.0 |
| Without notch | 64 | 60 |
| Bending strength ($kg/cm^2$) | 2044 | 2068 |
| Elastic modulus in bending ($kp/cm^2$) | $11 \times 10^4$ | $11.5 \times 10^4$ |

The molding temperature of the test pieces was set to the cylinder temperature of 240°C.

Examples 6 and 7

The test pieces were prepared from the compositions, which were obtained by adding low molecular weight polyethylene used in Examples 1 to 5 to the composition used in the comparative example 1 at a ratio of 0.9 and 2 parts by weight based on the latter of 100 parts by weight, respectively, by means of a biaxial extruder of 28 mm. The test results are shown in the following table:

| Example | Amount added (parts by weight) | Tensile strength ($kp/cm^2$) | |
|---|---|---|---|
| | | Without residing in an extruder | After the composition was resided in an extruder for 30 minutes |
| 6 | 0.9 | 1482 | 1215 |
| 7 | 2 | 1285 | 1028 |

Examples 8 and 9 and Comparative Example 5

The test pieces were prepared in the same manner as described in Example 2 by means of a biaxial extruder of 28 mm excepting that polyethylene having different molecular weights were used. The test results are shown in the following table:

| Example | Molecular weight of polyethylene | Tensile strength ($kp/cm^2$) | |
|---|---|---|---|
| | | Without residing | After the composition was resided inside an extruder for 25 minutes |
| 8 | 1500 | 1296 | 1079 |
| 9 | 5000 | 1365 | 1174 |
| Comp. Ex. 5 | 40000 | 1338 | 1004 |

Low molecular weight polyethhylenes having molecular weight of 1,500 and 5,000 were manufactured by thermal decomposition method.

Examples 10 to 13 and Comparative Example 6

The test pieces were prepared from the compositions as shown in the following table, which were obtained by adding low molecular weight polyethylene used in examples 1 to 5 to the systems in which one

kind or two kinds or more of fire retardants were used and brominated cyanuric acid ester compounds were added, by means of a monoaxial type extruder of 65 mm and tested in the same manner as described in Example 1 to 5. The test results are shown in Table III. The values of composition are represented by parts by weight based on the whole composition of 100 parts. Also the case, in which brominated cyanuric acid esters were not used, were shown for comparative examples.

TABLE III

| Composition and physical properties | Examples | | | | Comparative example |
|---|---|---|---|---|---|
| | 10 | 11 | 12 | 13 | 6 |
| PBT | 58.2 | 58.4 | 58.3 | 58.9 | 59.9 |
| Glass fibers | 31.0 | 31.0 | 31.0 | 31.0 | 31.0 |
| Asbestos | 2.5 | 2.5 | 2.5 | 2.5 | 2.5 |
| Halogen-containing compounds | 3.3*[2] | 2.7*[2] | 2.6*[2]<br>0.6*[4] | 2.6*[2]<br>0.6*[4] | .6*[2]<br>0.6*[3] |
| Antimony trioxide | 3.6 | 3.0 | 3.4 | 3.4 | 3.4 |
| Brominated cyanuric acid ester compounds | 0.8 | 0.8 | 0.8 | | |
| Polyethylene*[1] | 0.8 | 1.6 | 0.8 | 1.0 | |
| Changes of physical properties in dependence upon residence time of compositions in an extruder prior to molding<br>Tensile strength ($kp/cm^2$) 0 minute | 1400 | 1454 | 1421 | 1393 | 1362 |
| 30 minutes | 1281 | 1352 | 1272 | 1143 | 833 |

*[1] Low molecular weight polyethylene (molecular weight of 5,000; manufactured by thermal decomposition method)
*[2] Decabromodiphenyl ether
*[3] Brominated polycarbonate

**Claims**

1. A fire retardant thermoplastic polyester composition comprising a thermoplastic polyester resin, a fire retardant, an assistant fire retardant, an inorganic filler and an olefin polymer, characterized in that the olefin polymer is polyethylene wax prepared by the thermal decomposition of polyethylene and containing some polar groups.

2. The composition according to claim 1, characterized in that said polyethylene wax is preliminarily blended with said fire retardant and said assistant fire retardant at temperatures higher than the melting point of said polyethylene wax and the resulting blend is cooled followed by grinding.

3. The composition according to any of claims 1 to 2, characterized in that said thermoplastic polyester resin is a polyalkylene terephthalate resin.

4. The composition according to claim 3, characterized in that said polyalkylene terephthalate resin is polybutylene terephthalate.

5. The composition according to any of claims 1 to 4, characterized in that said fire retardant is a bromine-containing organic compound and that said assistant fire retardant is an inorganic compound.

6. The composition according to claim 5, characterized in that said fire retardant is decabromodiphenylether, brominated polycarbonate, a brominated ester of cyanuric acid, a brominated epoxy compound or a mixture thereof.

7. The composition according to any of claims 1 to 6, characterized in that said inorganic fillers are glass fibers.

8. A process for preparing a fire retardant thermoplastic polyester composition comprising a thermoplastic polyester resin, a fire retardant, an assistant fire retardant, an inorganic filler and an olefin

polymer, characterized in that as said olefin polymer polyethylene wax prepared by the thermal decomposition of polyethylene and containing some polar groups is used and is previously blended with said fire retardant and said assistant fire retardant ät temperatures higher than its melting point followed by cooling and grinding the resultant mixture before all other components are blended in.

## Patentansprüche

1. Feuerhemmende thermoplastische Polyestermasse, umfassend ein thermoplastisches Polyesterharz, einen Feuerhemmstoff bzw. -retarder, einen Hilfsfeuerhemmstoff bzw. -retarder, ein anorganisches Füllmittel und ein Olefinpolymer, dadurch gekennzeichnet, daß das Olefinpolymer Polyethylenwachs ist, das durch thermische Zersetzung von Polyethylen hergestellt worden ist, und einige polare Gruppen enthält.

2. Masse nach Anspruch 1, dadurch gekennzeichnet, daß das Polyethylenwachs einleitend mit dem Feuerhemmstoff und dem Hilfsfeuerhemmstoff bei Temperaturen, die höher sind als der Schmelzpunkt des Polyethylenwachses, gemischt wird und die erhaltene Mischung gekühlt wird, gefolgt von Mahlen.

3. Masse nach Anspruch 1 oder 2, dadurch gekennzeichnet, daß das thermoplastische Polyesterharz ein Polyalkylenterephthalatharz ist.

4. Masse nach Anspruch 3, dadurch gekennzeichnet, daß das Polyalkylenterephthalatharz Polybutylenterephthalat ist.

5. Masse nach einem der Ansprüche 1 bis 4, dadurch gekennzeichnet, daß der Feuerhemmstoff eine bromhaltige organischhe Verbindung ist und daß der Hilfsfeuerhemmstoff eine anorganische Verbindung ist.

6. Masse nach Anspruch 5, dadurch gekennzeichnet, daß der Feuerhemmstoff Decabromdiphenylether, bromiertes Polycarbonat, ein bromierter Ester von Cyanursäure, eine bromierte Epoxyverbindung oder eine Mischung daraus ist.

7. Masse nach einem der Ansprüche 1 bis 6, dadurch gekennzeichnet, daß die anorganischen Füllmittel Glasfasern sind.

8. Verfahren zur Herstellung einer feuerhemmenden thermoplastischen Polyestermasse, umfassend ein thermoplastisches Polyesterharz, einen Feuerhemmstoff bzw. -retarder, einen Hilfsfeuerhemmstoff bzw. -retarder, ein anorganisches Füllmittel und ein Olefinpolymer, dadurch gekennzeichnet, daß als Olefinpolymer Polyethylenwachs, das durch thermische Zersetzung von Polyethylen hergestellt worden ist und einige polare Gruppen enthält, verwendet wird und daß es vorher mit dem Feuerhemmstoff und dem Hilfsfeuerhemmstoff bei Temperaturen, die höher sind als sein Schmelzpunkt, gemischt wird, gefolt von Kühlen und Mahlen der erhaltenen Mischung, bevor alle anderen Komponenten eingemischt werden.

## Revendications

1. Composition de polyester thermoplastique ignifuge comprenant une résine polyester thermoplastique, un agent ignifugeant, un agent ignifugeant auxiliaire, une charge minérale et un polymère oléfinique, caractérisée en ce que le polymère oléfinique est une cire de polyéthylène préparée par décomposition thermique du polyéthylène et contenant certains groupes polaires.

2. Composition suivant la revendication 1, caractérisée en ce que cette cire de polyéthylène est mélangée au préalable avec cet agent ignifugeant et cet agent ignifugeant auxiliaire à des températures supérieures au point de fusion de cette cire de polyéthylène, et en ce que le mélange obtenu est refroidi puis broyé.

3. Composition suivant l'une quelconque des revendications 1 et 2, caractérisée en ce que cette résine de polyester thermoplastique est une résine de polyalkylène téréphtalate.

4. Composition suivant la revendication 3, caractérisée en ce que cette résine de polyalkylène téréphtalate est du polybutylène téréphtalate.

5. Composition suivant l'une quelconque des revendications 1 à 4, caractérisée en ce que cet agent ignifugeant est un composé organique bromé et en ce que cet agent ignifugeant auxiliaire est un composé minéral.

6. Composiution suivant la revendication 5, caractérisée en ce que agent ignifugeant est l'éther décabromodiphénylique, un polycarbonate bromé, un ester bromé de l'acide cyanurique, un époxyde bromé ou un mélange de ceux-ci.

7. Composition suivant l'une quelconque des revendications 1 à 6, caractérisée en ce que ces charges minérales sont des fibres de verre.

8. Procédé de préparation d'une composition de polyester thermoplastique ignifuge comprenant une résine polyester thermoplastique, un agent ignifugeant, un agent ignifugeant auxiliaire, une charge minérale et un polymère d'oléfine, caractérisé en ce qu'on utilise comme ce polymère d'oléfine une cire de polyéthylène préparée par décomposition thermique du polyéthylène et contenant certains groupes polaires, et en ce qu'on mélange au préalable cet agent ignifugeant et cet agent ignifugeant auxiliaire, à des températures supérieures à son point de fusion, après quoi on refroidit et broie le mélange obtenu avant d'y mélanger tous les autres constituants.